(19) Europäisches Patentamt
European Patent Office
Office européen des brevets

(11) EP 4 424 716 A1

(12) EUROPEAN PATENT APPLICATION
published in accordance with Art. 153(4) EPC

(43) Date of publication:
**04.09.2024 Bulletin 2024/36**

(21) Application number: **22887174.5**

(22) Date of filing: **28.10.2022**

(51) International Patent Classification (IPC):
***C08B 5/14*** *(2006.01)*

(52) Cooperative Patent Classification (CPC):
**C08B 5/14; C08J 3/02; C08J 5/18; C08L 1/16; D06M 13/248**

(86) International application number:
**PCT/JP2022/040373**

(87) International publication number:
**WO 2023/074849 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.10.2021 JP 2021177388**

(71) Applicant: **Yokogawa Electric Corporation**
**Musashino-shi, Tokyo 180-8750 (JP)**

(72) Inventors:
- **MOCHIDUKI Makoto**
  **Musashino-shi, Tokyo 180-8750 (JP)**
- **SAKO Takahiro**
  **Musashino-shi, Tokyo 180-8750 (JP)**
- **SUZUKI Takeshi**
  **Musashino-shi, Tokyo 180-8750 (JP)**
- **IWAMOTO Shinichiro**
  **Musashino-shi, Tokyo 180-8750 (JP)**
- **TANI Ryotaro**
  **Musashino-shi, Tokyo 180-8750 (JP)**

(74) Representative: **Grünecker Patent- und Rechtsanwälte**
**PartG mbB**
**Leopoldstraße 4**
**80802 München (DE)**

# (54) FINE CELLULOSE FIBER SOLID MATERIAL AND METHOD FOR PRODUCING FINE CELLULOSE FIBER SOLID MATERIAL

(57) An object of the present disclosure is to provide a fine cellulose fiber solid body that can be easily dispersed in water or the like. One aspect of the present invention is a fine cellulose fiber solid material comprising a fine cellulose fiber and water, wherein the fine cellulose fiber has an average fiber width of 1 nm to 1000 nm, the fine cellulose fiber has a sulfate ester group represented by the following general formula (1), wherein n is an integer of 1 to 3, $M^{n+}$ is an n-valent cation, and a wavy line is a bonding site to another atom, the fine cellulose fiber has an amount of sulfur introduced due to the sulfate ester group of 0.3 mmol/g or more and 3.0 mmol/g or less, the solid material has a moisture content of 50% by mass or less and the solid material has a specific surface area of 5 $m^2$/g or more.

[Formula 1]

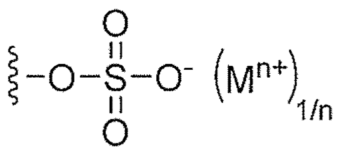

· · · (1)

EP 4 424 716 A1

## Description

### Technical Field

The present disclosure relates to a fine cellulose fiber solid material and a method for producing the fine cellulose fiber solid material.

### Background Art

Growing environmental awareness has led to the development of investigations for the practical application of biomass-derived materials around the world. For example, much of the cellulose extracted from wood (wood chips) is used to make paper, which contributes greatly to both the daily lives of people and $CO_2$ fixation.

There is growing momentum for the utilization of biomass-derived materials in the paints, coatings, and cosmetics industries. Furthermore, there is growing momentum for the utilization of biomass-derived materials also in the production of raw materials used in these industries. In addition, in these and many other fields, there is a need to replace organic solvents that are harmful to the human body with aqueous solvents from the viewpoint of safety and quality of life.

Among cellulose, cellulose nanofibers are utilized or desired to be utilized in many fields. Cellulose nanofibers are biomass-derived compounds made from cellulose fibers that have been defibrated to nanosize. They are well dispersed in water, and by drying the dispersion, a transparent nanocellulose film can be easily obtained. In addition, when mixed with resin and/or rubber, various physical properties such as strength, flexibility, and elongation are improved. Thus, cellulose nanofibers are attracting attention as a new environmentally friendly material, and a variety of proposals have been made in the past.

For example, Patent Literature 1 discloses a fine cellulose fiber obtained by modifying cellulose using a N-oxyl compound such as 2,2,6,6-tetramethylpiperidine-N-oxyl (hereinafter, "TEMPO") as an oxidation catalyst.

For example, Patent Literature 2 discloses a microfibrous cellulose aggregate comprising a microfibrous cellulose with an average fiber width of 2 to 50 nm and a liquid compound. In Patent Literature 2, Example 2-1 discloses, as the microfibrous cellulose, a microfibrous cellulose to which phosphate group is introduced.

Also, Patent Literature 3 discloses a method for producing a fine cellulose fiber-containing dried solid material, and in that production method, a chemical treatment step in which pulp is chemically treated, a miniaturization step in which the pulp after the chemical treatment step is miniaturized into a fine cellulose fiber with an average fiber width of 1 nm to 1000 nm, and other steps are disclosed as essential steps. Patent Literature 3 also discloses, as an essential step, a step of introducing sulfo groups to some of the hydroxyl groups of cellulose constituting the pulp fiber.

### Citation List

#### Patent Literature

Patent Literature 1: JP Patent Publication (Kokai) No. 2008-1728 A
Patent Literature 2: International Publication No. WO 2014/024876 A1
Patent Literature 3: JP Patent Publication (Kokai) No. 2020-97812 A

### Summary of Invention

#### Technical Problem

In general, cellulose nanofibers are fibers with a fiber length of several hundred nanometers (nm) to a maximum of several tens of micrometers ($\mu$m) and a fiber width of 1 nm to several hundred nm. However, the industrial application of cellulose nanofibers to date has faced many challenges in terms of degree of freedom in formulation design, storage, and transportation.

Conventionally, once cellulose nanofiber aqueous dispersions are dried to obtain cellulose nanofibers as solid materials (solid bodies), such as powders, it is difficult to disperse the cellulose nanofiber solid materials again in other aqueous compositions, and to uniformly disperse them in materials such as resin. Furthermore, it is difficult to increase the concentration of cellulose nanofibers in cellulose nanofiber aqueous dispersions. For this reason, conventional cellulose nanofibers are often sold, used, etc. as aqueous dispersions with a low concentration of cellulose nanofibers, such as about 0.5 to 2 wt%. Therefore, cellulose nanofiber aqueous dispersions are mostly composed of water, which increases their volume and weight, and requires extensive facilities for transportation and storage. Also, when conventional cellulose nanofibers are added to compositions such as paints and cosmetics, in order to increase the amount of cellulose nanofibers, the amount of water added at the same time, that is, the amount of water as the dispersion medium, is also increased, which results in problems due to the increased amount of water, such as viscosity characteristics, concentration balance, etc. of the compositions being greatly disrupted, and there is a problem of a low degree of freedom in formulation design.

Even with the fine cellulose fiber disclosed in Patent Literature 1 and the microfibrous cellulose to which phosphate group is introduced disclosed in Patent Literature 2, it is difficult to re-disperse them in water after they are obtained as solid materials.

The fine cellulose fiber-containing dried solid material disclosed in Patent Literature 3 can be re-dispersed in water, but according to investigations by the present inventors, in order to disperse the fine cellulose fibers at the nanolevel, it is necessary to spend a long time for the dispersion treatment, or to use an extensive apparatus such as a high-pressure homogenizer, and the dried solid material is not yet sufficiently dispersible.

In addition, conventional cellulose nanofiber aqueous dispersions contain a large amount of water, which poses a risk of bacterial growth during storage. For this reason, additives such as preservatives are sometimes added to conventional cellulose nanofiber aqueous dispersions, but the addition of preservatives is unfavorable in some applications of cellulose nanofibers. Furthermore, for the fine cellulose fiber-containing dried solid material disclosed in Patent Literature 3, an aspect is disclosed in which a component other than the fine cellulose fiber (for example, dispersing agent) is used to enable re-dispersion, but the addition of dispersing agent is unfavorable for some applications of cellulose nanofibers.

Therefore, an object of the present disclosure is to provide a fine cellulose fiber solid material that can be easily dispersed in water or the like.

Solution to Problem

As a result of diligent studies to solve the above problems, the present inventors have found that a specific fine cellulose fiber solid material can solve the above problems, leading to the present disclosure.

Aspect examples of the present embodiment are described as follows.

(1) A fine cellulose fiber solid material comprising a fine cellulose fiber and water,

wherein the fine cellulose fiber has an average fiber width of 1 nm to 1000 nm,
the fine cellulose fiber has a sulfate ester group represented by the following general formula (1),
the fine cellulose fiber has an amount of sulfur introduced due to the sulfate ester group of 0.3 mmol/g or more and 3.0 mmol/g or less,
the solid material has a moisture content of 50% by mass or less, and
the solid material has a specific surface area of 1 $m^2/g$ or more:

[Formula 1]

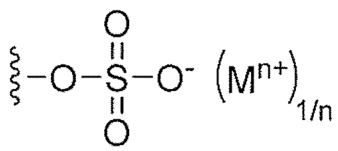

・・・(1)

wherein n is an integer of 1 to 3, $M^{n+}$ is an n-valent cation, and a wavy line is a bonding site to another atom.

(2) The fine cellulose fiber solid material according to (1), wherein an aqueous dispersion with a concentration of the fine cellulose fiber of 0.3% by mass, prepared by dispersing the fine cellulose fiber solid material in water so as to achieve a concentration of the fine cellulose fiber of 0.3% by mass, has a viscosity of 500 mPa·s or more, as measured at 2.6 rpm at 25°C.

(3) The fine cellulose fiber solid material according to (1) or (2), wherein an aqueous dispersion with a concentration of the fine cellulose fiber of 0.3% by mass, prepared by dispersing the fine cellulose fiber solid material in water so as to achieve a concentration of the fine cellulose fiber of 0.3% by mass, has a thixotropic index (TI value) of 1 to 30, as determined from viscosities measured at 2.6 rpm and 26 rpm at 25°C.

(4) The fine cellulose fiber solid material according to (1), wherein an aqueous dispersion with a concentration of the fine cellulose fiber of 0.3% by mass, prepared by dispersing the fine cellulose fiber solid material in water so as to achieve a concentration of the fine cellulose fiber of 0.3% by mass, has a viscosity of 500 mPa·s or more, as

measured at 2.6 rpm at 25°C, and
the aqueous dispersion has a thixotropic index (TI value) of 3 to 30, as determined from viscosities measured at 2.6 rpm and 26 rpm at 25°C.
(5) The fine cellulose fiber solid material according to any of (1) to (4), wherein $M^{n+}$ in the general formula (1) is sodium ion ($Na^+$).
(6) The fine cellulose fiber solid material according to any of (1) to (5), wherein an aqueous dispersion with a concentration of the fine cellulose fiber of 0.3% by mass, prepared by dispersing the fine cellulose fiber solid material in water so as to achieve a concentration of the fine cellulose fiber of 0.3% by mass, has a total light transmittance of 90% or more.
(7) The fine cellulose fiber solid material according to any of (1) to (6), wherein an aqueous dispersion with a concentration of the fine cellulose fiber of 0.3% by mass, prepared by dispersing the fine cellulose fiber solid material in water so as to achieve a concentration of the fine cellulose fiber of 0.3% by mass, has a haze value of 20% or less.
(8) The fine cellulose fiber solid material according to any of (1) to (7), comprising 10 to 1000 ppm of dimethyl sulfoxide.
(9) The fine cellulose fiber solid material according to any of (1) to (8), comprising 5000 ppm or less of ammonium ion represented by $NH_4^+$.
(10) A method for producing a fine cellulose fiber aqueous dispersion, the method comprising a step of dispersing the fine cellulose fiber solid material according to any of (1) to (9) in water.
(11) A method for producing a film, the method comprising a step of forming a fine cellulose fiber aqueous dispersion obtained by the production method according to (10) into a film.
(12) A method for producing the fine cellulose fiber solid material according to any of (1) to (9),
wherein the method comprises a drying step of drying an aqueous dispersion of the fine cellulose fiber to obtain the fine cellulose fiber solid material.

The present application claims priority to JP Patent Application No. 2021-177388, and the disclosure of which is encompassed herein.

Advantageous Effects of Invention

According to the present disclosure, there can be provided a fine cellulose fiber solid material that can be easily dispersed in water or the like.

Description of Embodiments

One aspect of the present embodiment is a fine cellulose fiber solid material comprising a fine cellulose fiber and water, wherein the fine cellulose fiber has an average fiber width of 1 nm to 1000 nm, the fine cellulose fiber has a sulfate ester group represented by the following general formula (1), the fine cellulose fiber has an amount of sulfur introduced due to the sulfate ester group of 0.3 mmol/g or more and 3.0 mmol/g or less, the solid material has a moisture content of 50% by mass or less, and the solid material has a specific surface area of 1 $m^2$/g or more.
The fine cellulose fiber solid material of the present embodiment can be easily dispersed in water or the like. The solid material, after being dispersed in water or the like, also has excellent stability, and liquid separation is unlikely to occur. The fine cellulose fiber solid material of the present embodiment is easily dispersed in water or the like, and thus can be added in compositions as a solid material rather than as a dispersion, allowing for a high degree of freedom in formulation design and eliminating the need to use a dispersing agent. Furthermore, since the solid material is not a dispersion containing a large amount of water, it is easy to transport and store, and since the solid material can be stored as a solid material with a small amount of moisture, there is no need to use a preservative, either. Therefore, the fine cellulose fiber solid material of the present embodiment can be used in a variety of fields, including the paints, coatings, and cosmetics industries.
Hereinafter, the present embodiment will be described in detail.

(Fine cellulose fiber)

The fine cellulose fiber solid material of the present embodiment contains a fine cellulose fiber. Note that the general cellulose (unmodified cellulose) is a polysaccharide in which glucose is β-1,4-glycosidically bonded, and is represented by $(C_6H_{10}O_5)_n$, but the fine cellulose fiber in the present embodiment is a fiber composed of modified cellulose, as is clear from the presence of sulfate ester group.
The average fiber width of the fine cellulose fiber is 1 nm to 1000 nm, preferably 1 nm to 100 nm, and more preferably 2 nm to 10 nm. Although there are no particular restrictions on the average fiber length of the fine cellulose fiber, the average fiber length thereof is normally 0.1 μm to 6 μm, and preferably 0.1 μm to 2 μm.

The average fiber width and the average fiber length can be measured by, for example, using an atomic force microscope (SPM-9700HT, manufactured by Shimadzu Corporation) to measure the fiber width (fiber diameter (equivalent circle diameter)) and the fiber length in 50 arbitrarily selected fibers, and then calculating their respective arithmetic mean values. The average fiber width and the average fiber length can be set to the desired ranges by adjusting the sulfate esterification reaction time and the adding ratio of reagents.

The fine cellulose fiber has a sulfate ester group represented by the following general formula (1). Note that the fine cellulose fiber is also referred to as sulfate-esterified cellulose nanofiber. To the fine cellulose fiber, the sulfate ester group is introduced by replacing some of the OH groups in cellulose, which normally constitutes the fiber, with the sulfate ester group(s) represented by the general formula (1). The fine cellulose fiber can be produced by, for example, sulfate esterification and defibration of the raw material pulp, as shown in Examples. Although there are no particular restrictions on the method of sulfate esterification, examples thereof include a method in which sulfate esterification is performed by using sulfuric acid, preferably by using sulfuric acid together with dimethyl sulfoxide (DMSO) and an acid (for example, acetic acid), and a method in which sulfate esterification is performed by using sulfamic acid together with, for example, urea or a derivative thereof. From the viewpoint of not generating ammonium ion represented by $NH_4^+$, performing sulfate esterification using sulfuric acid is one of the preferred aspects.

[Formula 2]

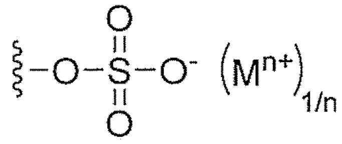

· · · (1)

wherein n is an integer of 1 to 3, $M^{n+}$ is an n-valent cation, and a wavy line is a bonding site to another atom.

Examples of $M^{n+}$ include hydrogen ion ($H^+$), metal ions, and ammonium ions. In the case where n is 2 or 3, $M^{n+}$ forms ionic bonds with two or three $-OSO_3^-$.

Examples of the metal ions include alkali metal ions, alkaline earth metal ions, transition metal ions, and other metal ions.

Here, examples of the alkali metal ions include lithium ion ($Li^+$), sodium ion ($Na^+$), potassium ion ($K^+$), rubidium ion ($Rb^+$), and cesium ion ($Cs^+$). Examples of the alkaline earth metal ions include calcium ion ($Ca^{2+}$) and strontium ion ($Sr^{2+}$). Examples of the transition metal ions include iron ion, nickel ion, palladium ion, copper ion, and silver ion. Examples of the other metal ions include beryllium ion, magnesium ion, zinc ion, and aluminum ion.

Examples of the ammonium ions include not only $NH_4^+$ but also various amine-derived ammonium ions formed by the replacement of one or more hydrogen atoms of $NH_4^+$ with organic groups. Examples of the ammonium ions include $NH_4^+$, quaternary ammonium cations, alkanolamine ions, and pyridinium ions.

As $M^{n+}$, from the viewpoint of processability in each application of the fine cellulose fiber solid material, hydrogen ion, sodium ion, potassium ion, calcium ion, or quaternary ammonium cations are preferable, and sodium ion ($Na^+$) is particularly preferable. The sulfate ester group represented by the above general formula (1) may have only one type of, or two or more types of $M^{n+}$. In the case where $NH_4^+$ is included as $M^{n+}$, it is preferable that some of $M^{n+}$ is $NH_4^+$, and 0.1 to 30% of all $M^{n+}$ being $NH_4^+$ is one of the preferred aspects.

In the case where the sulfate ester group is introduced to the fine cellulose fiber by replacing some of the OH groups in the cellulose constituting the fiber with the sulfate ester group represented by the general formula (1), the wavy line is the bonding site to carbon atoms to which the aforementioned OH groups were bonded.

The fine cellulose fiber may have another substituent in addition to the sulfate ester group represented by the above general formula (1). Here, in the case where the fine cellulose fiber has a group other than the sulfate ester group represented by the above general formula (1), that is, another substituent, the other substituent is normally replaced with at least one of the OH groups in the cellulose constituting the fine cellulose fiber. Although there are no particular limitations on the other substituent, examples thereof include anionic substituents and salts thereof, ester groups, ether groups, acyl groups, aldehyde groups, alkyl groups, alkylene groups, aryl groups, and combinations of two or more of these. In the case where the other substituent is a combination of two or more types, the content ratio of each substituent is not limited. As the other substituent, in particular, anionic substituents and salts thereof, or acyl groups are preferable from the viewpoint of nano-dispersibility. As the anionic substituents and salts thereof, in particular, carboxy group, phosphate ester groups, phosphite ester groups, and xanthate groups are preferable. When the anionic substituents are in the form of salts, sodium salts, potassium salts, and calcium salts are particularly preferable from the viewpoint of nano-dispersibility. Also, as a particularly preferred acyl group, acetyl group is preferable from the viewpoint of nano-dispersibility.

The fine cellulose fiber has an amount of sulfur introduced due to the sulfate ester group of 0.3 mmol/g or more

and 3.0 mmol/g or less. The amount of the sulfate ester group introduced can be set to an arbitrary and proper value within the aforementioned range, depending on the application and other factors. The amount of sulfur introduced due to the sulfate ester group in fine cellulose fiber can be expressed as the sulfur content (mmol) per gram of the fine cellulose fiber. The amount of sulfur introduced is preferably 0.5 mmol/g or more and 3.0 mmol/g or less, and more preferably 0.7 mmol/g or more and 3.0 mmol/g or less. When the amount of sulfur introduced is within the aforementioned range, it is preferable from the viewpoint of dispersibility in water.

The amount of sulfur introduced can be determined by, for example, the combustion absorption-ion chromatography (IC) method (combustion absorption-IC method, combustion IC method) described in Examples. The amount of sulfur introduced can be adjusted by, for example, controlling the concentration of reagents such as sulfuric acid in the solution (defibrating solution) used to defibrate the pulp, the amount of pulp with respect to the defibrating solution, the reaction time, the temperature, and other factors.

(Fine cellulose fiber solid material)

The fine cellulose fiber solid material of the present embodiment comprises a fine cellulose fiber and water. The fine cellulose fiber solid material may comprise components other than the fine cellulose fiber and water, or may be formed solely from the fine cellulose fiber and water. Since the fine cellulose fiber is normally not dissolved in water, in the case where the fine cellulose fiber solid material is formed solely from the fine cellulose fiber and water, the solid contents in a fine cellulose fiber aqueous dispersion prepared from the solid material and water mean the fine cellulose fiber. Therefore, the solid concentration is substantially synonymous with the concentration of the fine cellulose fiber, and the solid mass is substantially synonymous with the mass of the fine cellulose fiber. Note that, in the fine cellulose fiber solid material, components derived from the production process of the fine cellulose fiber may be contained. For example, the fine cellulose fiber solid material may comprise 10 to 1000 ppm of DMSO. Also, the fine cellulose fiber solid material may comprise 5000 ppm or less of ammonium ion represented by $NH_4^+$. Note that comprising 5000 ppm or less encompasses not comprising (0 ppm, or the detection limit or lower), and in other words, comprising 5000 ppm or less means 0 to 5000 ppm.

The specific surface area of the fine cellulose fiber solid material is 1 $m^2$/g or more, preferably 3 $m^2$/g or more, and more preferably 5 $m^2$/g or more. Also, the specific surface area is preferably 1000 $m^2$/g or less, and more preferably 500 $m^2$/g or less. The specific surface area of the fine cellulose fiber solid material can be determined by, for example, the BET method by nitrogen gas adsorption. The specific surface area of the fine cellulose fiber solid material can be adjusted by, for example, adding a hydrophilic organic solvent, changing the drying temperature, and/or changing the drying method such as freeze drying and vacuum drying, when drying the fine cellulose fiber aqueous dispersion.

The fine cellulose fiber solid material has a moisture content of 50% by mass or less, preferably 30% by mass or less, and more preferably 15% by mass or less. Also, the moisture content is preferably 1% by mass or more, and more preferably 3% by mass or more. The higher the moisture content, the easier the fine cellulose fiber solid material can be dispersed in water. On the other hand, the lower the moisture content, the easier it is to transport and store, and the fine cellulose fiber solid material can be added in compositions, etc. without increasing the amount of moisture, resulting in a higher degree of freedom in formulation design, which is preferable. Examples of water in the present invention include tap water, ion-exchanged water, distilled water, purified water, and natural water. Tap water, ion-exchanged water, distilled water, and purified water are preferable, and ion-exchanged water, distilled water, and purified water are more preferable.

The moisture content of the fine cellulose fiber solid material can be determined in accordance with JIS P8203, for example.

The amount of the fine cellulose fiber contained in the fine cellulose fiber solid material is normally 50% by mass or more, preferably 70% by mass or more, and more preferably 85% by mass or more. Also, the amount of the fine cellulose fiber is preferably 99% by mass or less, and more preferably 97% by mass or less.

Although there are no particular restrictions on the shape of the fine cellulose fiber solid material, examples thereof include powder, chip, flake, and film forms. The powder form means, for example, a powder with a median diameter of 0.1 to 1000 $\mu$m. Note that the median diameter of the fine cellulose fiber solid material can be measured by, for example, using a dry particle size analyzer in accordance with the ISO 13320 and JIS Z 8825 standards for the laser diffraction and scattering method.

As for the fine cellulose fiber solid material, an aqueous dispersion with a concentration of the fine cellulose fiber of 0.3% by mass, prepared by dispersing the fine cellulose fiber solid material in water so as to achieve a concentration of the fine cellulose fiber of 0.3% by mass, preferably has a viscosity of 500 mPa·s or more, more preferably 1000 mPa·s or more, and particularly preferably 5000 mPa·s or more, as measured at 2.6 rpm at 25°C. Also, the viscosity measured at 2.6 rpm is preferably 50000 mPa·s or less, and more preferably 40000 mPa·s or less. Note that 2.6 rpm means the rotation speed of the viscometer (for example, B-type viscometer) used for viscosity measurement.

Note that the concentration of the fine cellulose fiber is a different concept from the concentration of the fine

cellulose fiber solid material. That is, the concentration of the fine cellulose fiber is the concentration focusing on the fine cellulose contained in the fine cellulose fiber solid material. For example, in the case where the fine cellulose fiber solid material comprises only a fine cellulose fiber and water, and the moisture content is 25% by mass, by weighing 0.4 g of the fine cellulose fiber solid material and mixing it with 99.6 g of water, 100 g of an aqueous dispersion with a concentration of the fine cellulose fiber of 0.3% by mass can be prepared.

As for the fine cellulose fiber solid material, an aqueous dispersion with a concentration of the fine cellulose fiber of 0.3% by mass, prepared by dispersing the fine cellulose fiber solid material in water so as to achieve a concentration of the fine cellulose fiber of 0.3% by mass, preferably has a thixotropic index (TI value) of 1 to 30, more preferably 2 to 25, and particularly preferably 3 to 20, as determined from viscosities measured at 2.6 rpm and 26 rpm at 25°C. Also, a TI value of 3 to 30 or 3 to 25 may be mentioned as a preferred aspect. Note that 2.6 rpm and 26 rpm each mean the rotation speed of the viscometer (for example, B-type viscometer) used for viscosity measurement. Also, the TI value can be calculated from the following expression.

$$\text{TI value} = (\text{Viscosity measured at 2.6 rpm})/(\text{Viscosity measured at 26 rpm})$$

As for the fine cellulose fiber solid material, an aqueous dispersion with a concentration of the fine cellulose fiber of 0.3% by mass, prepared by dispersing the fine cellulose fiber solid material in water so as to achieve a concentration of the fine cellulose fiber of 0.3% by mass, preferably has a total light transmittance of 90% or more, and more preferably 95% or more. The total light transmittance is normally 100% or less.

As for the fine cellulose fiber solid material, an aqueous dispersion with a concentration of the fine cellulose fiber of 0.3% by mass, prepared by dispersing the fine cellulose fiber solid material in water so as to achieve a concentration of the fine cellulose fiber of 0.3% by mass, preferably has a haze value of 20% or less, and more preferably 15% or less. The haze value is normally 0% or more.

In the case where the fine cellulose fiber solid material comprises components other than the fine cellulose fiber and water, the solid material may comprise, for example, additives. The additives may be inorganic additives or organic additives.

Examples of the inorganic additives include inorganic microparticles. Examples of the inorganic microparticles include microparticles of silica, mica, talc, clay, carbon, carbonate salts (for example, calcium carbonate, magnesium carbonate), oxides (for example, aluminum oxide, titanium oxide, zinc oxide, iron oxide), ceramics (for example, ferrite), or mixtures of these. The inorganic microparticles may be contained in the fine cellulose fiber solid material in an amount within the range of 0.09 to 5% by mass, for example.

Examples of the organic additives include at least one substance selected from the group consisting of resins and rubbers. Examples of the resins and rubbers include phenolic resins, melamine resins, urea resins, alkyd resins, epoxy resins, unsaturated polyester resins, polyurethane resins, polyethylene resins (for example, high density polyethylene, medium density polyethylene, low density polyethylene), polypropylene resins, polystyrene resins, acrylic resins, polyvinyl alcohols, acrylamide resins, silicone resins, natural rubbers, and synthetic rubbers. The fine cellulose fiber solid material may also comprise functional compounds as the organic additives. Examples of the functional compounds include dyes, UV absorbers, antioxidants, antistatic agents, and surfactants. The organic additives may be contained in the fine cellulose fiber solid material in an amount within the range of 0.09 to 5% by mass, for example.

Although the fine cellulose fiber solid material may comprise components other than the fine cellulose fiber and water, the fine cellulose fiber solid material being formed solely from the fine cellulose fiber and water is one of the preferred aspects. Note that being formed solely from the fine cellulose fiber and water encompasses not only the case where the total amount of the fine cellulose fiber and water accounts for 100% by mass of the fine cellulose fiber solid material, but also the case where the fine cellulose fiber solid material comprises the fine cellulose fiber and water and no other components are added intentionally. That is, the case where components other than the fine cellulose fiber and water are contained in the fine cellulose fiber solid material as impurities also falls under the fine cellulose fiber solid material formed solely from the fine cellulose fiber and water. That is, the fine cellulose fiber solid material formed solely from the fine cellulose fiber and water is a concept that encompasses fine cellulose fiber solid materials formed substantially solely from the fine cellulose fiber and water. Note that examples of the fine cellulose fiber solid material formed substantially solely from the fine cellulose fiber and water include aspects in which the fine cellulose fiber and water are contained in a total amount of 99% by mass or more in 100% by mass of the fine cellulose fiber solid material.

The fine cellulose fiber solid material of the present embodiment can be used in various applications, for example, as a fine cellulose fiber aqueous dispersion. Examples of the fine cellulose fiber aqueous dispersion of the present embodiment include fine cellulose fiber aqueous dispersions in which the fine cellulose fiber solid material is dispersed in water. In other words, the present invention includes, as one embodiment, a method for producing a fine cellulose fiber aqueous dispersion, the method comprising a step of dispersing the fine cellulose fiber solid material in water.

The fine cellulose fiber aqueous dispersion may comprise components other than water. As the components other than water, various components can be used that are added in aqueous compositions in the paints, coatings, cosmetics, and other industries, for example. Since the fine cellulose fiber solid material is easily dispersed in water, without the use of a dispersing agent, a composition in which the fine cellulose fiber is uniformly dispersed can be obtained as the fine cellulose fiber aqueous dispersion. In addition, since conventional fine cellulose fibers are normally distributed as low concentration aqueous dispersions, when mixed with an aqueous composition, a large amount of water is added to the aqueous composition along with the fine cellulose fibers, resulting in a low degree of freedom in formulation design. On the other hand, the fine cellulose fiber solid material can be mixed directly with an aqueous composition, thus allowing for a high degree of freedom in formulation design, which is preferable.

The fine cellulose fiber aqueous dispersion can be used as appropriate depending on its application. For example, in the field of paints and coatings, a film can be formed by forming the fine cellulose fiber aqueous dispersion into a film. Examples of the film of the present embodiment include films made by forming the fine cellulose fiber aqueous dispersion into a film. In other words, the present invention includes, as one embodiment, a method for producing a film, the method comprising a step of forming the fine cellulose fiber aqueous dispersion into a film. There are no particular restrictions on the thickness of the film (coating film), which can be set as appropriate depending on its application. Since the film of the present embodiment is obtained from the fine cellulose fiber aqueous dispersion, which has excellent dispersibility of the fine cellulose fiber, aggregation of the fine cellulose fiber is suppressed in the film as well, which is preferable.

(Method for producing fine cellulose fiber solid material)

Although there are no particular restrictions on the method for producing the aforementioned fine cellulose fiber solid material, the solid material can be obtained through, for example, a step of drying a dispersion of the fine cellulose fiber containing water and/or a dispersion medium other than water. Examples of the dispersion medium other than water include polar organic solvents such as dimethyl sulfoxide, alcohols, and polyols, as well as ionic liquids such as quaternary ammonium compounds. As the dispersion medium, it is preferable to use water or a mixed solvent of water and an organic solvent, and from the viewpoint of safety and other factors, it is preferable to use water.

Although there are no particular restrictions on the method for preparing a dispersion of the fine cellulose fiber containing water and/or a dispersion medium other than water, the dispersion can be obtained by, for example, the method described in Examples, in which a cellulose fiber is defibrated to nanosize while introducing the sulfate ester group, purified, and then dispersed in water.

By removing (drying) the dispersion medium from the dispersion of the fine cellulose fiber, the fine cellulose fiber solid material can be obtained. As the drying method, known methods can be used, and there are no particular limitations thereon. Examples thereof may include freeze drying, spray drying, pressing, air drying, hot air drying, precipitation method, and vacuum drying. The drying apparatus is not particularly limited, and it is possible to use a conical drying apparatus, a continuous tunnel drying apparatus, a band drying apparatus, a vertical drying apparatus, a vertical turbo drying apparatus, a multi-disk drying apparatus, a ventilation drying apparatus, a rotary drying apparatus, an airflow drying apparatus, a spray dryer drying apparatus, a spray drying apparatus, a cylindrical drying apparatus, a drum drying apparatus, a belt drying apparatus, a screw conveyor drying apparatus, a rotary drying apparatus with a heating tube, a vibration conveyance drying apparatus, a batch-type box drying apparatus, a ventilation drying apparatus, a vacuum box drying apparatus, an agitation drying apparatus, and other apparatuses, alone or in combination of two or more thereof. The drying method is preferably hot air drying, which allows for drying in a short time.

The fine cellulose fiber solid material may be pulverized using a dry pulverizer or the like, as necessary, and may be made into a powder with the desired size for use, storage, and distribution.

Examples of the method for producing the fine cellulose fiber solid material of the present embodiment include a method for producing the aforementioned fine cellulose fiber solid material, wherein the method comprises a drying step of drying an aqueous dispersion of the fine cellulose fiber to obtain the fine cellulose fiber solid material. As the dispersion medium of the dispersion, at least water is used. It is preferable to use water or a mixed solvent of water and an organic solvent, and from the viewpoint of safety and other factors, it is more preferable to use water. In the present embodiment, an aqueous dispersion of the fine cellulose fiber is prepared in advance. By drying the aqueous dispersion, the aforementioned fine cellulose fiber solid material can be obtained. Although there are no particular restrictions on the concentration of the fine cellulose fiber in the aqueous dispersion of the fine cellulose fiber, the concentration is normally 0.1 to 50% by mass, and preferably 0.5 to 10% by mass.

Examples

Hereinafter, the present embodiment will be described with reference to Examples, but the present disclosure is not limited by these examples.

[Comparative Example 1]

150 g of dimethyl sulfoxide (DMSO), 25 g of acetic anhydride (concentration in defibrating solution: 14% by mass), and 3.35 g of sulfuric acid (concentration in defibrating solution: 1.87% by mass) were placed in a 300 ml sample bottle, and stirred using a magnetic stirrer at room temperature of 23°C for about 30 seconds to prepare a defibrating solution.

Then, 5.0 g of softwood kraft pulp NBKP (manufactured by Nippon Paper Industries Co., Ltd.) was added to the defibrating solution, and the mixture was further stirred at room temperature of 23°C for 2 hours to carry out a sulfate esterification reaction. After the stirring, the reaction was stopped by adding 250 ml of distilled water to the cellulose-containing defibrating solution, followed by the addition of a 5 mass% aqueous sodium hydroxide solution until the pH reached 7, thereby neutralizing the reaction solution. Thereafter, the supernatant was removed by centrifugation.

Furthermore, 1350 ml of distilled water was added and the mixture was stirred until uniformly dispersed, and then the supernatant was removed by centrifugation. The same procedure was repeated for a total of three washes. After washing by centrifugation, distilled water was added and dilution was performed until the total weight reached 500 g.

Next, stirring was performed using a mixer (G5200, manufactured by Biolomix) for 3 minutes to obtain a uniform 1 mass% aqueous dispersion of a fine cellulose fiber with a sulfate ester group. Subsequently, the obtained aqueous dispersion of the fine cellulose fiber was dried at 105°C using an air dryer until the amount of moisture reached 20% or less, thereby obtaining a sample No. 1, which is a fine cellulose fiber solid material. Note that no sterilization treatment was performed on the experimental instruments prior to use.

[Example 1]

A uniform 1 mass% aqueous dispersion of a fine cellulose fiber with a sulfate ester group prepared by the same method as in Comparative Example 1 was dried using a freeze dryer (FDU-2110, manufactured by Tokyo Rikakikai Co., Ltd.) for 48 hours, thereby obtaining a sample No. 2, which is a fine cellulose fiber solid material.

[Example 2]

To 500 g of a uniform 1 mass% aqueous dispersion of a fine cellulose fiber with a sulfate ester group prepared by the same method as in Comparative Example, 1500 g of methanol was added, and the mixture was stirred for 2 hours, thereby carrying out precipitation of the fine cellulose fiber.

The dispersion containing a fine cellulose fiber precipitate obtained in the precipitation step was treated with a centrifuge to remove the supernatant, thereby obtaining the fine cellulose fiber precipitate. Note that the speed of centrifugation was 12000 rpm and the centrifugation time was 50 minutes. To the obtained fine cellulose precipitate, 1500 g of methanol was added, and the mixture was stirred for 2 hours, thereby carrying out the second precipitation of the fine cellulose fiber.

The dispersion containing a fine cellulose fiber precipitate obtained in the second precipitation step was treated with a centrifuge to remove the supernatant, thereby obtaining the fine cellulose fiber precipitate. Note that the speed of centrifugation was 12000 rpm and the centrifugation time was 50 minutes. Subsequently, the fine cellulose fiber precipitate obtained by the two precipitation steps was taken out into a beaker, and the entire beaker was subjected to vacuum drying at 40°C using a vacuum dryer (AVO-200V, manufactured by AS ONE Corporation) until the amount of moisture reached 20% or less, thereby obtaining a sample No. 3, which is a fine cellulose fiber solid material.

[Comparative Example 2]

The same process as in Comparative Example 1 was carried out except that the stirring time when carrying out the sulfate esterification reaction was changed from 2 hours to 5 hours, thereby obtaining a sample No. 4, which is a fine cellulose fiber solid material.

[Example 3]

The same process as in Example 1 was carried out except that the stirring time when carrying out the sulfate esterification reaction was changed from 2 hours to 5 hours, thereby obtaining a sample No. 5, which is a fine cellulose fiber solid material.

[Example 4]

The same process as in Example 2 was carried out except that the stirring time when carrying out the sulfate

esterification reaction was changed from 2 hours to 5 hours, thereby obtaining a sample No. 6, which is a fine cellulose fiber solid material.

[Example 5]

The same process as in Example 4 was carried out except that the number of washes using distilled water after the reaction was changed from three times to two times, thereby obtaining a sample No. 7, which is a fine cellulose fiber powder.

[Moisture content]

The moisture content of the samples obtained in Examples and Comparative Examples was determined by the following method within 24 hours after the sample preparation was completed.

The moisture content (% by mass) can be expressed as the amount of moisture with respect to the mass of the sample, in accordance with JIS P8203. That is, the moisture content (% by mass) can be determined from the following expression.

Moisture content (% by mass) = ((Mass of sample - Solid mass of sample)/Mass of sample)$\times$100

(The mass of the sample means the mass (g) of the sample subjected to the measurement. The solid mass of the sample means the mass (g) of solid materials remaining after drying the sample in the same amount as the sample subjected to the measurement in an atmosphere at 105°C for 2 hours until it reaches a constant amount.)

[Average fiber width]

The average fiber width of the fine cellulose fibers in the samples obtained in Examples and Comparative Examples was measured by using an atomic force microscope (SPM-9700HT, manufactured by Shimadzu Corporation) to measure the fiber widths in 50 arbitrarily selected fibers, and then calculating the arithmetic mean value thereof. The evaluation samples used were prepared by the following method.

The sample was weighed such that the fine cellulose fiber was 3 g, and the sample was added to distilled water weighed such that the total with the sample was 1000 g. Then, stirring was performed using a mixer (G5200, manufactured by Biolomix) for 3 minutes to obtain a uniform 0.3 mass% aqueous dispersion of the fine cellulose fiber (fine cellulose fiber aqueous dispersion). Subsequently, a 200 $\mu$m auxiliary processing module and an 87 $\mu$m interaction chamber were attached to a high-pressure homogenizer (M-110EH-30, manufactured by Microfluidics International Corporation), which is a high pressure disperser, and three-pass processing was performed under 200 MPa conditions to carry out a high dispersion treatment. Then, 149.0 g of distilled water was added to 1.0 g of a uniform 0.3 mass% aqueous dispersion of the fine cellulose fiber after the high dispersion treatment, and stirring was performed using a mixer (G5200, manufactured by Biolomix) for 3 minutes to obtain a uniform 0.002 mass% aqueous dispersion of the fine cellulose fiber. Subsequently, 30 $\mu$L of the uniform 0.002 mass% aqueous dispersion of the fine cellulose fiber was dropped with a micropipette onto a natural mica (natural white mica) substrate (15 mm $\times$ 15 mm $\times$ 0.15 mm thick), and allowed to dry naturally for 0.5 hour to obtain an evaluation sample.

[Amount of sulfur introduced]

The amount of sulfur introduced (mmol/g) in the fine cellulose fibers in the samples obtained in Examples and Comparative Examples was determined by the following method.

The amount of sulfur introduced in the fine cellulose fiber in the sample was quantified by the combustion absorption-IC method using ICS-1500 manufactured by Nippon Dionex K.K. A dried fine cellulose fiber (0.01 g) was placed in a magnetic board and burned in a circular furnace (1350°C) in an oxygen atmosphere (flow rate: 1.5 L/min), and the gas components generated were absorbed by a 3% hydrogen peroxide solution (20 ml) to obtain an absorbent solution. The obtained absorbent solution was scalded up to 100 ml with pure water, and the diluted solution was subjected to ion chromatography. From the measurement results, the sulfate ion concentration (% by weight) in the fine cellulose fiber was measured, and the amount of sulfur introduced per gram of the fine cellulose fiber (mmol/g) was calculated. Note that the dried fine cellulose fiber was obtained by drying the sample in an atmosphere at 105°C until it reached a constant amount.

[Specific surface area]

The specific surface area of the samples obtained in Examples and Comparative Examples was determined by the BET method by nitrogen gas adsorption, using a surface area and pore size analyzer (NOVA 4200e, manufactured by Anton Paar GmbH).

[Method for measuring DMSO amount]

At first, 15 g of water was added as the extraction solution to 0.5 g of the samples obtained in Examples and Comparative Examples, and treated with an ultrasonic washing machine for 30 minutes. Then, 30 g of acetone was added, the mixture was stirred by hand shaking, and then treated with an ultrasonic washing machine for 5 minutes. The extraction solution was collected and passed through a membrane filter (0.45 μm), and the amount of DMSO in the extraction solution was measured using GC-MS.

[Method for measuring $NH_4^+$ amount]

The amount of ammonium ion ($NH_4^+$) contained in the samples obtained in Examples and Comparative Examples was calculated from the content of nitrogen derived from the ammonium ion, using X-ray photoelectron spectroscopy (K-Alpha+ manufactured by Thermo Fisher Scientific K.K.). The sample was dispersed in water and then dried at room temperature to obtain a film-like solid, which was measured by X-ray photoelectron spectroscopy. The Kα radiation of single-crystal spectroscopic Al was used as the irradiation X-ray, the spot diameter was set to 400 μm, and a neutralizing electron gun was used. The atomic percentage of each atom was calculated from the area ratio of the obtained chart, and the atomic percentage of nitrogen derived from the ammonium ion was determined using the peak at a bond energy of 4101.9 eV as the peak of nitrogen derived from the ammonium ion. The weight ratio of the ammonium ion was calculated by multiplying the value of the atomic percentage by the molecular weight (atomic weight), and used as the amount of the ammonium ion. Note that the bond energy shown was the value where C-C and C-H were standardized as 284.6 eV. Also, when determining the atomic percentage, it was calculated using the relative sensitivity coefficient of the apparatus.

[Preparation of fine cellulose fiber aqueous dispersion]

Using the samples obtained in Examples and Comparative Examples, fine cellulose fiber aqueous dispersions were prepared.

Based on the moisture content, the sample was weighed such that the fine cellulose fiber was 0.3 g, and the sample was added to distilled water weighed such that the total with the sample was 100 g. Then, stirring was performed using a mixer (G5200, manufactured by Biolomix) for 3 minutes to obtain a uniform 0.3 mass% aqueous dispersion of the fine cellulose fiber (fine cellulose fiber aqueous dispersion).

[Viscosity]

The viscosity of the fine cellulose fiber aqueous dispersions prepared from the samples obtained in Examples and Comparative Examples was determined by defoaming and allowing to stand for 24 hours under the following conditions, then recording the viscosity at 10 minutes after the initiation of viscosity measurement (after the initiation of rotation) using a B-type viscometer (N = 3), and calculating the average value.

100 g of the fine cellulose fiber aqueous dispersion was subjected to a defoaming treatment for 10 seconds with a defoaming device (Thinky Mixer (Awatori Neritaro) ARE-310, manufactured by Thinky Corporation), and allowed to stand for 24 hours. Subsequently, using a B-type viscometer (DV-II+, manufactured by Brookfield Engineering Laboratories, Inc.), viscosity measurement was carried out at a rotation speed of 2.6 rpm, and the viscosity at 10 minutes after the initiation of measurement (after the initiation of rotation) was recorded. The viscosity measurement of a total of three fine cellulose fiber aqueous dispersions separately prepared by the same method was recorded (N = 3), and the average value of the three measurements was defined as the viscosity of the fine cellulose fiber aqueous dispersion (viscosity of the fine cellulose fiber aqueous dispersion at a rotation speed of 2.6 rpm). Note that the measurement was conducted in an environment where the temperature of the aqueous dispersion was 25°C.

100 g of the fine cellulose fiber aqueous dispersion was subjected to a defoaming treatment for 10 seconds with a defoaming device (Thinky Mixer (Awatori Neritaro) ARE-310, manufactured by Thinky Corporation), and allowed to stand for 24 hours. Subsequently, using a B-type viscometer (DV-II+, manufactured by Brookfield Engineering Laboratories, Inc.), viscosity measurement was carried out at a rotation speed of 26 rpm, and the viscosity at 10 minutes after the initiation of measurement (after the initiation of rotation) was recorded. The viscosity measurement of a total

of three fine cellulose fiber aqueous dispersions separately prepared by the same method was recorded (N = 3), and the average value of the three measurements was defined as the viscosity of the fine cellulose fiber aqueous dispersion (viscosity of the fine cellulose fiber aqueous dispersion at a rotation speed of 26 rpm). Note that the measurement was conducted in an environment where the temperature of the aqueous dispersion was 25°C.

From the viscosity of the fine cellulose fiber aqueous dispersion at a rotation speed of 2.6 rpm and the viscosity of the fine cellulose fiber aqueous dispersion at a rotation speed of 26 rpm, the thixotropic index (TI value) was calculated according to the following expression.

TI value = (Viscosity of the fine cellulose fiber aqueous dispersion at rotation speed of 2.6 rpm)/(Viscosity of the fine cellulose fiber aqueous dispersion at rotation speed of 26 rpm)

[Transmittance]

The transmittance of the fine cellulose fiber aqueous dispersions prepared from the samples obtained in Examples and Comparative Examples was measured by the following method.

2 mL of the fine cellulose fiber aqueous dispersion was put into the measurement cell, and using a transmissometer (UV-2600, manufactured by Shimadzu Corporation), the total light transmittance and diffuse transmittance were measured at a wavelength of 600 nm.

[Haze]

Using the diffuse transmittance and total light transmittance determined by the method described in the above [Transmittance] section, the haze value was calculated according to the following expression, thereby determining the haze value at a wavelength of 600 nm. Note that the haze value at a wavelength of 600 nm is also simply referred to as haze.

$$\text{Haze value} = (\text{Diffuse transmittance}/\text{Total light transmittance}) \times 100$$

[Water dispersibility]

The water dispersibility of the samples (fine cellulose fiber solid materials) obtained in Examples and Comparative Examples was evaluated by the following method.

1 g of the sample was measured onto a petri dish, and 10 g of water was gently dropped from the top of it, and the sample was allowed to stand for 1 hour. Thereafter, the form of the sample was visually observed, and the water dispersibility was evaluated according to the following criteria.

Excellent (E): The sample does not maintain the shape of the dry state
Poor (P): The sample maintains the shape of the dry state

[Mold resistance]

The mold resistance of the samples (fine cellulose fiber solid materials) obtained in Examples and Comparative Examples was evaluated by the following method.

5 g of the sample was placed in a 30 mL vial bottle, which was then tightly closed. The vial bottle in which each sample was placed was allowed to stand in a constant climate cabinet (LHL-114, manufactured by Espec Corp.) at 30°C and 60% RH for 3 months. After 3 months, the sample was taken out of the vial bottle to a petri dish and observed under an optical microscope to check for the presence or absence of colonies derived from fungi such as molds, and evaluated for mold resistance according to the following criteria.

Excellent (E): No colonies derived from fungi such as molds, with a diameter of 0.3 mm or more, occurred.
Poor (P): Colonies derived from fungi such as molds, with a diameter of 0.3 mm or more, occurred.

The average fiber width, the amount of sulfur introduced of the fine cellulose fibers in the samples obtained in Examples and Comparative Examples, the specific surface area, the DMSO amount, the $NH_4^+$ amount, the moisture content of the samples, the drying method, and the evaluation results of various physical properties of the fine cellulose fiber aqueous dispersions are shown in Table 1.

Note that, in Table 1, the viscosity of a fine cellulose fiber aqueous dispersion at a rotation speed of 2.6 rpm is referred to as viscosity at 2.6 rpm, and the viscosity of a fine cellulose fiber aqueous dispersion at a rotation speed of 26 rpm is referred to as viscosity at 26 rpm.

[Table 1]

Table 1

| | | Average fiber width (nm) | Amount of sulfur introduced [mmol/g] | Specific surface area ($m^2/g$) | Moisture content (% by mass) | DMSO [ppm by mass] | $NH_4^+$ [ppm by mass] | Drying method | Viscosity at 2.6 rpm [mPa·s] | Viscosity at 26 rpm [mPa·s] | TI value (viscosity at 2.6 rpm /viscosity at 26 rpm) | Total light transmittance (%) | Haze value (%) | Water dispersibility | Mold resistance |
|---|---|---|---|---|---|---|---|---|---|---|---|---|---|---|---|
| Comparative Example 1 | No. 1 | 8.9 | 0.7 | 0.2 | 7 | 83 | Detection limit or lower | Heat drying | 25830 | 8400 | 3.1 | 96.2 | 13.3 | P | E |
| Example 1 | No. 2 | 8.9 | 0.7 | 53.3 | 12 | 95 | Detection limit or lower | Freeze drying | 32500 | 10280 | 3.2 | 97.9 | 11.9 | E | E |
| Example 2 | No. 3 | 8.9 | 0.7 | 7.4 | 11 | 93 | Detection limit or lower | Vacuum drying after precipitation | 31490 | 9950 | 3.2 | 97.5 | 10.8 | E | E |
| Comparative Example 2 | No. 4 | 3.2 | 1.5 | 0.3 | 11 | 82 | Detection limit or lower | Heat drying | 8080 | 410 | 19.7 | 98.5 | 3.6 | P | E |
| Example 3 | No. 5 | 3.2 | 1.5 | 129.5 | 13 | 90 | Detection limit or lower | Freeze drying | 9250 | 850 | 10.9 | 99.3 | 2.4 | E | E |
| Example 4 | No. 6 | 3.2 | 1.5 | 101.6 | 8 | 93 | Detection limit or lower | Vacuum drying after precipitation | 8780 | 530 | 16.6 | 99.3 | 1.9 | E | E |
| Example 5 | No. 7 | 3.2 | 1.5 | 90.9 | 8 | 910 | Detection limit or lower | Vacuum drying after precipitation | 7510 | 721 | 10.4 | 97.0 | 5.4 | E | E |

The aqueous dispersions using the samples obtained in Examples exhibited excellent water dispersibility.

[Reference Example 1]

<Production of fine cellulose fiber dispersion>

Softwood kraft pulp NBKP (manufactured by Nippon Paper Industries Co., Ltd.) was used. In the following, NBKP used in Reference Example 1 is also simply referred to as pulp. The pulp was washed with a large amount of pure water, drained through a 200 mesh sieve, and used after measuring the solid concentration.

(Chemical treatment step)

The pulp was added to the reaction solution prepared as follows, and stirred to form a slurry.

(Preparation step of reaction solution)

The reaction solution was prepared such that a sulfonating agent and urea or/and a derivative thereof had the following solid concentrations.

Sulfamic acid (98.5% purity, manufactured by Fuso Chemical Co., Ltd.) was used as the sulfonating agent, and a urea solution (99% purity, manufactured by Wako Pure Chemical Industries, Ltd., model number; special grade reagent) was used as the urea or a derivative thereof. The mixture ratio of the two was 1:1.5 in terms of concentration ratio (g/L) to prepare the aqueous solution. Specifically, sulfamic acid and urea were mixed as follows.

$$\text{Sulfamic acid/urea ratio } ((g/L)/(g/L)) = 200/300$$

The preparation method of the reaction solution is shown below. 100 ml of water was added to a container. Next, 20 g of sulfamic acid and 30 g of urea were added to this container to prepare a reaction solution with a sulfamic acid/urea ratio ((g/L)/(g/L)) of 200/300 (1:1.5). That is, urea was added such that urea was 150 parts by weight with respect to 100 parts by weight of sulfamic acid.

In Reference Example 1, to the reaction solution thus prepared, 2 g of the pulp was added in terms of absolute dry weight. That is, in the case of the above reaction solution with a sulfamic acid/urea ratio ((g/L)/(g/L)) of 200/300 (1:1.5), a slurry was prepared such that sulfamic acid was 1000 parts by weight and urea was 1500 parts by weight, with respect to 100 parts by weight of the pulp.

The slurry prepared by adding the pulp to the reaction solution was stirred using a stirrer for 10 minutes. After stirring, the slurry was suction filtered using filter paper (No. 2). Suction filtration was carried out until the solution stopped dropping. After suction filtration, the pulp was removed from the filter paper, and the filtered pulp was placed and dried in a dryer (LC-114, manufactured by ESPEC Corp.) with the temperature of the thermostatic chamber set to 50°C until the moisture content reached an equilibrium state.

After the moisture content reached an equilibrium state, a heating reaction was carried out. For the heating reaction, a dryer (LC-114, manufactured by ESPEC Corp.) was used. The reaction conditions are as follows.
temperature of thermostatic chamber: 160°C, heating time: 1 hour

After the heating reaction, the pulp that had undergone the reaction was diluted with pure water to reach 1% by weight or less of solid contents, neutralized by adding an excess amount of sodium hydrogen carbonate, and then thoroughly washed with pure water to prepare a sulfamic acid/urea-treated pulp suspension.

Using a high pressure homogenizer (M-110EH-30, manufactured by Microfluidics International Corporation), defibration of the sulfamic acid/urea-treated pulp was carried out to prepare a sulfonated fine cellulose fiber dispersion. The treatment conditions of the high pressure homogenizer were as follows.

The sulfamic acid/urea-treated pulp, which was prepared to reach a solid concentration of 0.5% by weight, was supplied to the high pressure homogenizer. The passes were repeated until no coarse fibers could be visually observed. Note that the pressure at that time was set to 60 MPa.

(Drying Step)

50 g of the obtained 0.5 weight% sulfonated fine cellulose fiber dispersion (0.25 g in terms of absolute dry weight) was aliquoted onto a petri dish, and heated and dried in a dryer at 60°C until the moisture content reached equilibrium (moisture content of 10% or less), thereby obtaining a fine cellulose fiber-containing dried solid material.

<Re-dispersion, and viscosity and TI value measurement>

The sample was weighed such that the fine cellulose fiber in the fine cellulose fiber-containing dried solid material was 0.3 g, and the sample was added to distilled water weighed such that the total with the sample was 100 g. Then, stirring was performed using a mixer (G5200, manufactured by Biolomix) for 3 minutes to obtain a uniform 0.3 mass% aqueous dispersion of the fine cellulose fiber (fine cellulose fiber aqueous dispersion).

[Viscosity]

100 g of the fine cellulose fiber aqueous dispersion was subjected to a defoaming treatment for 10 seconds with a defoaming device (Thinky Mixer (Awatori Neritaro) ARE-310, manufactured by Thinky Corporation), and allowed to stand for 24 hours. Subsequently, using a B-type viscometer (DV-II+, manufactured by Brookfield Engineering Laboratories, Inc.), viscosity measurement was carried out at a rotation speed of 2.6 rpm, and the viscosity at 10 minutes after the initiation of measurement (after the initiation of rotation) was recorded. The viscosity measurement of a total of three fine cellulose fiber aqueous dispersions separately prepared by the same method was recorded (N = 3), and the average value of the three measurements was defined as the viscosity of the fine cellulose fiber aqueous dispersion (viscosity of the fine cellulose fiber aqueous dispersion at a rotation speed of 2.6 rpm). Note that the measurement was conducted in an environment where the temperature of the aqueous dispersion was 25°C.

100 g of the fine cellulose fiber aqueous dispersion was subjected to a defoaming treatment for 10 seconds with a defoaming device (Thinky Mixer (Awatori Neritaro) ARE-310, manufactured by Thinky Corporation), and allowed to stand for 24 hours. Subsequently, using a B-type viscometer (DV-II+, manufactured by Brookfield Engineering Laboratories, Inc.), viscosity measurement was carried out at a rotation speed of 26 rpm, and the viscosity at 10 minutes after the initiation of measurement (after the initiation of rotation) was recorded. The viscosity measurement of a total of three fine cellulose fiber aqueous dispersions separately prepared by the same method was recorded (N = 3), and the average value of the three measurements was defined as the viscosity of the fine cellulose fiber aqueous dispersion (viscosity of the fine cellulose fiber aqueous dispersion at a rotation speed of 26 rpm). Note that the measurement was conducted in an environment where the temperature of the aqueous dispersion was 25°C.

[TI value]

From the viscosity of the fine cellulose fiber aqueous dispersion at a rotation speed of 2.6 rpm and the viscosity of the fine cellulose fiber aqueous dispersion at a rotation speed of 26 rpm, the thixotropic index (TI value) was calculated according to the following expression.

TI value = (Viscosity of the fine cellulose fiber aqueous dispersion at rotation speed of 2.6 rpm)/(Viscosity of the fine cellulose fiber aqueous dispersion at rotation speed of 26 rpm)

As for the fine cellulose fiber prepared in Reference Example 1, DMSO content was at the detection limit or lower and $NH_4^+$ content was 7700 ppm. The viscosities measured at 2.6 rpm and 26 rpm of the 0.3% aqueous dispersion of the fine cellulose fiber were 520 mPa·s and 220 mPa·s, respectively, and the TI value was 2.4.

The upper limit values and/or lower limit values of the numerical ranges described herein can be arbitrarily combined to specify preferred ranges. For example, the upper limit values and lower limit values of the numerical ranges can be arbitrarily combined to specify preferred ranges, the upper limit values of the numerical ranges can be arbitrarily combined with each other to specify preferred ranges, and the lower limit values of the numerical ranges can be arbitrarily combined with each other to specify preferred ranges. Also, in the present application, the numerical value ranges expressed using the term "to" include each of the numerical values described before and after the term "to" as the lower limit value and the upper limit value, respectively.

Although the present embodiment has been described in detail above, specific configurations are not limited to this embodiment, and any design modifications to the extent that they do not depart from the gist of the present disclosure are included in the present disclosure.

All publications, patents, and patent applications cited in the present specification are incorporated herein by reference as a whole.

## Claims

**1.** A fine cellulose fiber solid material comprising a fine cellulose fiber and water,

wherein the fine cellulose fiber has an average fiber width of 1 nm to 1000 nm,
the fine cellulose fiber has a sulfate ester group represented by the following general formula (1),
the fine cellulose fiber has an amount of sulfur introduced due to the sulfate ester group of 0.3 mmol/g or more and 3.0 mmol/g or less,
the solid material has a moisture content of 50% by mass or less, and
the solid material has a specific surface area of 1 $m^2/g$ or more:

[Formula 1]

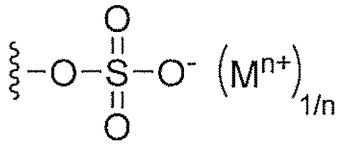

・・・(1)

wherein n is an integer of 1 to 3, $M^{n+}$ is an n-valent cation, and a wavy line is a bonding site to another atom.

**2.** The fine cellulose fiber solid material according to claim 1, wherein an aqueous dispersion with a concentration of the fine cellulose fiber of 0.3% by mass, prepared by dispersing the fine cellulose fiber solid material in water so as to achieve a concentration of the fine cellulose fiber of 0.3% by mass, has a viscosity of 500 mPa·s or more, as measured at 2.6 rpm at 25°C.

**3.** The fine cellulose fiber solid material according to claim 1 or 2, wherein an aqueous dispersion with a concentration of the fine cellulose fiber of 0.3% by mass, prepared by dispersing the fine cellulose fiber solid material in water so as to achieve a concentration of the fine cellulose fiber of 0.3% by mass, has a thixotropic index (TI value) of 1 to 30, as determined from viscosities measured at 2.6 rpm and 26 rpm at 25°C.

**4.** The fine cellulose fiber solid material according to claim 1, wherein an aqueous dispersion with a concentration of the fine cellulose fiber of 0.3% by mass, prepared by dispersing the fine cellulose fiber solid material in water so as to achieve a concentration of the fine cellulose fiber of 0.3% by mass, has a viscosity of 500 mPa·s or more, as measured at 2.6 rpm at 25°C, and
the aqueous dispersion has a thixotropic index (TI value) of 3 to 30, as determined from viscosities measured at 2.6 rpm and 26 rpm at 25°C.

**5.** The fine cellulose fiber solid material according to any one of claims 1 to 4, wherein $M^{n+}$ in the general formula (1) is sodium ion ($Na^+$).

**6.** The fine cellulose fiber solid material according to any one of claims 1 to 5, wherein an aqueous dispersion with a concentration of the fine cellulose fiber of 0.3% by mass, prepared by dispersing the fine cellulose fiber solid material in water so as to achieve a concentration of the fine cellulose fiber of 0.3% by mass, has a total light transmittance of 90% or more.

**7.** The fine cellulose fiber solid material according to any one of claims 1 to 6, wherein an aqueous dispersion with a concentration of the fine cellulose fiber of 0.3% by mass, prepared by dispersing the fine cellulose fiber solid material in water so as to achieve a concentration of the fine cellulose fiber of 0.3% by mass, has a haze value of 20% or less.

**8.** The fine cellulose fiber solid material according to any one of claims 1 to 7, comprising 10 to 1000 ppm of dimethyl sulfoxide.

**9.** The fine cellulose fiber solid material according to any one of claims 1 to 8, comprising 5000 ppm or less of ammonium ion represented by $NH_4^+$.

**10.** A method for producing a fine cellulose fiber aqueous dispersion, the method comprising a step of dispersing the fine cellulose fiber solid material according to any one of claims 1 to 9 in water.

**11.** A method for producing a film, the method comprising a step of forming a fine cellulose fiber aqueous dispersion obtained by the production method according to claim 10 into a film.

**12.** A method for producing the fine cellulose fiber solid material according to any one of claims 1 to 9, wherein the method comprises a drying step of drying an aqueous dispersion of the fine cellulose fiber to obtain the fine cellulose fiber solid material.

## INTERNATIONAL SEARCH REPORT

International application No.
**PCT/JP2022/040373**

**A. CLASSIFICATION OF SUBJECT MATTER**

***C08B 5/14***(2006.01)i
FI: C08B5/14

According to International Patent Classification (IPC) or to both national classification and IPC

**B. FIELDS SEARCHED**

Minimum documentation searched (classification system followed by classification symbols)

C08B5/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2021/215502 A1 (OJI HOLDINGS CORP.) 28 October 2021 (2021-10-28) paragraph [0231] | 11 |
| A | | 1-10, 12 |
| X | WO 2021/117662 A1 (TOYO SEIKAN GROUP HOLDINGS LTD.) 17 June 2021 (2021-06-17) paragraph [0077] | 11 |
| A | | 1-10, 12 |
| X | JP 2020-97812 A (MARUSUMI PAPER CO., LTD.) 25 June 2020 (2020-06-25) claim 4, fig. 2 | 1-12 |
| Y | claim 4, fig. 2 | 1-12 |
| Y | JP 2020-158737 A (SUGINO MACHINE LTD.) 01 October 2020 (2020-10-01) paragraphs [0005], [0006] | 1-12 |
| A | JP 2021-152123 A (DAI ICHI KOGYO SEIYAKU CO., LTD.) 30 September 2021 (2021-09-30) entire text | 1-12 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 January 2023** | **17 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/040373**

**C. DOCUMENTS CONSIDERED TO BE RELEVANT**

| Category* | Citation of document, with indication, where appropriate, of the relevant passages | Relevant to claim No. |
|---|---|---|
| A | JP 2021-095470 A (OJI HOLDINGS CORP.) 24 June 2021 (2021-06-24) entire text | 1-12 |
| A | JP 2014-114416 A (KAO CORP.) 26 June 2014 (2014-06-26) entire text | 1-12 |

Form PCT/ISA/210 (second sheet) (January 2015)

**INTERNATIONAL SEARCH REPORT**
**Information on patent family members**

International application No.
**PCT/JP2022/040373**

| Patent document cited in search report | Publication date (day/month/year) | Patent family member(s) | Publication date (day/month/year) |
|---|---|---|---|
| WO 2021/215502 A1 | 28 October 2021 | (Family: none) | |
| WO 2021/117662 A1 | 17 June 2021 | (Family: none) | |
| JP 2020-97812 A | 25 June 2020 | JP 2020-117717 A<br>US 2022/0074141 A1<br>claim 4, fig. 2<br>JP 2020-117718 A<br>JP 2020-97733 A<br>WO 2020/129855 A1<br>EP 3901195 A1<br>CN 112930364 A | |
| JP 2020-158737 A | 01 October 2020 | (Family: none) | |
| JP 2021-152123 A | 30 September 2021 | (Family: none) | |
| JP 2021-095470 A | 24 June 2021 | (Family: none) | |
| JP 2014-114416 A | 26 June 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008001728 A
- WO 2014024876 A1
- JP 2020097812 A
- JP 2021177388 A